# EUROPEAN PATENT APPLICATION

(11) **EP 2 620 916 A2**
(43) Date of publication of application: **31.07.2013**
(21) Application number: 13000365.0
(22) Date of filing: 24.01.2013
(51) Int. Cl.: G06T 11/00

(54) **Visualization of uncertain times series**

(30) Priority: 30.01.2012 US 201213361416
(71) Applicant: SAP AG, 69190 Walldorf (DE)
(72) Inventor: Dannecker, Lars, 69190 Walldorf (DE); Eisenreich, Katrin, 69190 Walldorf (DE); Rösch, Philipp, 69190 Walldorf (DE); Schröder, Axel, 69190 Walldorf (DE)
(74) Representative: Müller-Boré & Partner Patentanwälte

(57) **Abstract**

Implementations of the present disclosure include methods, systems, and computer-readable storage mediums for receiving a probability distribution function model, the probability distribution function model representing an uncertain time series and providing a plurality of probability distribution functions, each probability distribution function corresponding to respective values at a respective time in the uncertain time series, generating a visualization based on the probability distribution function model to create a transparency gradient, the transparency gradient including a plurality of points graphically representing the plurality of probability distribution functions, and displaying the visualization including the transparency gradient, wherein a visual characteristic of each point of the plurality of points of the transparency gradient is a function of a probability of the respective value associated with the respective point.

## Description

### BACKGROUND

Forecasting and prediction are used in decision making processes. In some examples, and in addition to analyzing historic data to see past developments, analysts seek to determine how their business most likely will develop in the future and can use historic data analysis as a basis of well-founded decisions.

Sophisticated algorithms are available to compute forecasts and predictions for different needs and settings of analysts. However, when providing past and future analyses, the analysis of the past provides precision, while the analysis of the future exhibits uncertainty. Thus, the analysis of the future (e.g., forecasting/prediction) is more complex as analysts typically deal with historical analysis to generate forecasts. More specifically, in the field of forecasting and prediction, results are no longer certain discrete values, but can be provided as probability distribution functions of values. Such probability distribution functions can require statistical skills of the analysts to understand and interpret the results.

### SUMMARY

Implementations of the present disclosure include computer-implemented methods for providing a visualization depicting an uncertain time series, the methods being performed using one or more processors and including the actions of receiving, from computer-readable memory, a probability distribution function model, the probability distribution function model representing the uncertain time series and providing a plurality of probability distribution functions, each probability distribution function corresponding to respective values at a respective time in the uncertain time series, generating, using one or more processors, the visualization based on the probability distribution function model to create a transparency gradient, the transparency gradient including a plurality of points graphically representing the plurality of probability distribution functions, and displaying, on a display device, the visualization including the transparency gradient, wherein a visual characteristic of each point of the plurality of points of the transparency gradient is a function of a probability of the respective value associated with the respective point.

In some implementations, the visual characteristic of each point of the plurality of points has a direct relationship with the probability of the respective value associated with the respective time. The visual characteristic can includes transparency and a lower transparency of each point of the plurality of points indicates a higher probability of the respective value associated with the respective time.

In some implementations, actions further include interpolating data points and visual characteristics for additional times that are between the respective times of each corresponding probability distribution function.

In some implementations, the visualization includes a continuous transparency gradient.

In some implementations, the visualization includes a discrete transparency gradient. The discrete transparency gradient includes two or more probability bands.

In some implementations, displaying further includes displaying one or more confidence intervals overlaying the transparency gradient. Actions can further include: receiving user input associated with the one or more confidence intervals, and moving, in response to the user input, the one or more confidence intervals relative to the transparency gradient.

The present disclosure also provides a computer-readable storage medium coupled to one or more processors and having instructions stored thereon which, when executed by the one or more processors, cause the one or more processors to perform operations in accordance with implementations of the methods provided herein.

The present disclosure further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

It is appreciated that methods in accordance with the present disclosure can include any combination of the aspects and features described herein. That is, methods in accordance with the present disclosure are not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

### DESCRIPTION OF DRAWINGS

FIG. 1 is an example uncertain time series represented by a table and a visualization.

FIGS. 2A-2C depict partial generation of a visualization.

FIG. 3 depicts an example visualization.

FIG. 4 depicts an example visualization.

FIG. 5 depicts the example visualization of FIG. 4 including confidence intervals.

FIG. 6 is a flowchart depicting an example process for creating a visualization of an uncertain time series.

FIG. 7 is a schematic illustration of example computer systems that can be used to execute implementations of the present disclosure.

Like reference symbols in the various drawings indicate like elements.

### DETAILED DESCRIPTION

Implementations of the present disclosure are generally directed to creating visualizations of uncertain time series. In some implementations, a visualization is provided as a graphical, visual representation of an uncertain time series. In some implementations, a probability distribution function model is received that represents the uncertain time series with one or more probability distribution functions. In some examples, the uncertain time series is provided as a series of values associated with respective time. Each probability distribution function corresponds to a discrete time within the time series. In some examples, each probability distribution function provides probabilities of values of a variable at a particular time in the time series.

In some implementations, the visualization can be generated based on the probability distribution function model to create a transparency gradient that graphically represents the probability distribution functions. For example, the transparency gradient can include, for each discrete time in the time series, a plurality of data points that each represent a value of a variable. Each data point is associated with a visual characteristic that is provided based on a probability of the value of the data point. In some examples, a visual characteristic can include a degree of transparency of a color (e.g., black) associated with the data point. In some examples, the degree of transparency of each data point has a direct relationship with the probability of the associated value for the respective discrete time. In some examples, a lower transparency (e.g., full color) indicates a higher probability of the corresponding value for the respective data point.

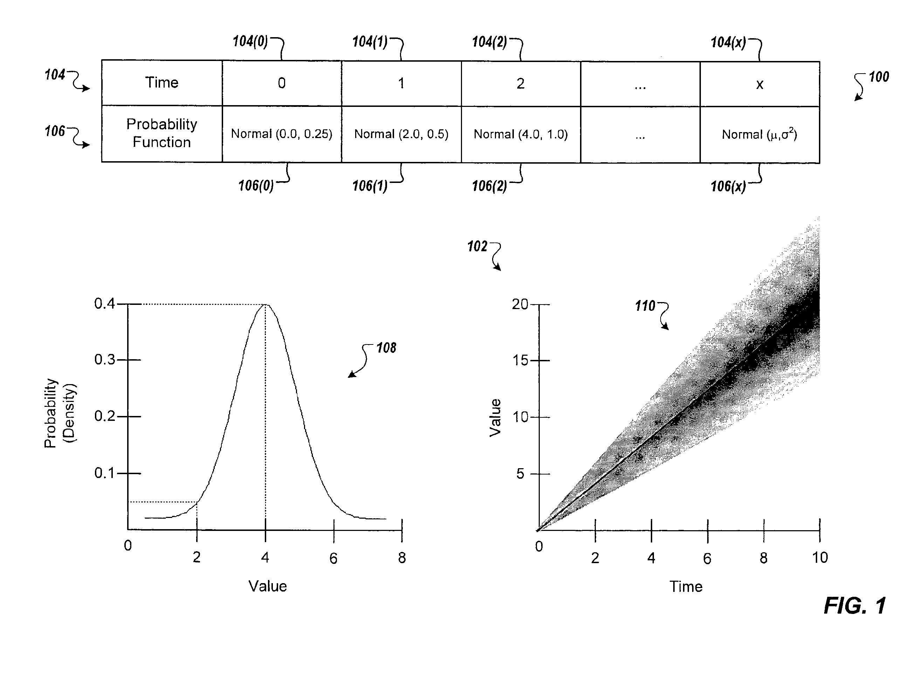

FIG. 1 is an example uncertain time series represented by a table 100 and a visualization 102. In the depicted example, the uncertain time series is provided as a sequence of discrete data points sequentially predicted over time. The table 100 includes, for each discrete time 104 (shown as discrete times 104(0), 104(1), 104(2), ..., 104(x)) in the time series, a probability distribution function 106 (shown as probability distribution functions 106(0), 106(1), 106(2), ..., 106(x)). The discrete times 104 can represent any portion of time (e.g., microseconds, seconds, minutes, hours, days, months, etc.).

The probability distribution functions 106 represent, for the respective discrete time 104, a probability of a value at the respective discrete time 104. In some implementations, the probability distribution functions 106 can include any type of probability distribution functions. An example probability distribution function can include a normal probability distribution function. For example, for each respective discrete time 104, the value associated with a discrete time 104 can be represented by a normal probability distribution function. In some examples, the normal probability distribution function has two associated parameters, the value (e.g., provided as a mean value (µ)) and a variance (σ²). In the depicted example, the mean value is associated with a peak probability of the normal probability distribution function, and the variance is a measure of the width of the distribution of the normal probability distribution function, where σ is the standard deviation of the normal probability distribution function.

In the depicted example, the probability distribution function 106(2) for the discrete time 104(2) is shown graphically as a normal probability distribution function 108. The normal probability distribution function 108 provides a probability distribution function of values (e.g., a probability or density) for the discrete time 104(2). The normal probability distribution function 108 includes the parameters associated with the discrete time 104(2). Thus, the normal probability distribution function 108 includes a probability of values for the discrete time 104(2) with a mean of 4.0 and variance of 1.0. For example, in view of the normal probability distribution function 108, the value 4 has a 0.4 probability (e.g., 40%) of being the value of a variable at the discrete time 104(2) and the value 2 has a 0.06 probability (e.g., 6%) of being the value of the variable for the discrete time 104(2). In the depicted example, each discrete time 104 is associated with a respective normal probability distribution function, each normal probability distribution function having respective parameters (e.g., mean and variance) associated with the respective discrete time 104.

The example visualization 102 includes an example transparency gradient 110 that is provided based on the probability distribution functions 106 for each discrete time 104. More particularly, the transparency gradient 110 can include a plurality of data points that graphically represent the probability distribution functions 106. That is, the data points graphically represent the values of a variable and the probabilities of the values based on the associated probability distribution function 106 for each discrete time 104.

The plurality of data points each includes an associated visual characteristic. Example visual characteristics can be provided as color, transparency and/or opacity. In some implementations, the visual characteristic of the data points can be a function of the probability of the value associated with the respective discrete time. In some examples, the visual characteristic of the data point can have a direct relationship with the probability of the corresponding value associated with the respective time. For example, a first visual characteristic of a first data point can indicate a higher probability of the corresponding value associated with the respective time, and a second visual characteristic of a second data point indicates a lower probability of the corresponding value for the respective discrete time.

In some implementations, the visual characteristics of the data points can directly reflect the probability of the corresponding value for the respective discrete time. By way of non-limiting example, a 50% transparency of a color (e.g., black) of a data point can indicate that the corresponding value has a 0.5 (e.g., 50%) probability of being the value for the respective discrete time. In some implementations, the visual characteristics of the data points can relatively reflect the probability of the corresponding value of the respective discrete time with respect to the visual characteristics of the other data points. Continuing with the non-limiting example, a value having the maximum probability (e.g., .5 or 50%) for a discrete time can have the lowest transparency (e.g., 0% transparent), with the remaining values of less probability can have scaled transparencies (e.g., a value having a probability of 0.25 for a discrete time can have a 50% transparency).

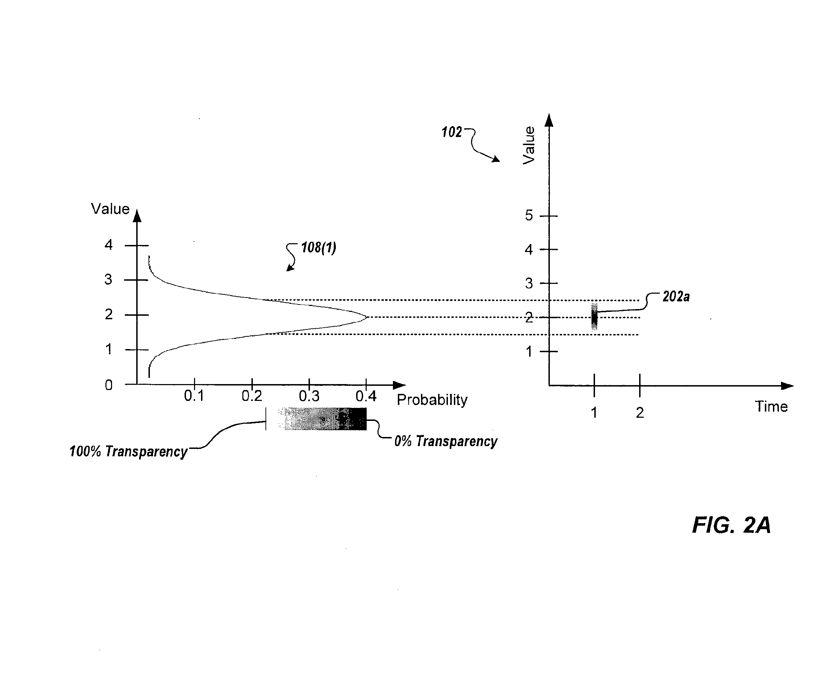

In some implementations, to generate the transparency gradient 110, the probability distribution functions 106 of each discrete time 104 are aggregated, with interpolation of values between the discrete times 104, shown in FIGS. 2A-2C.

As shown in FIG. 2A, an example normal probability distribution function 108(1) for the discrete time 104(1) is mapped to provide a transparency gradient slice 202a. The normal probability distribution function 108(1) is shown rotated with respect to the visualization 102 to aid in displaying the mapping of the normal probability distribution function 108(1) to provide the transparency gradient slice 202a.

In the depicted example, the normal probability distribution function 108(1), for the discrete time 104(1), includes the parameters of 2.0 for the mean value and 0.5 for the variance. According to the normal probability distribution function 108(1), the value 2 has a 0.4 probability (e.g., 40%) of being the value of the variable at the discrete time 104(1), and the value 3 has a 0.06 probability (e.g., 6%) of being the value of the variable at the discrete time 104(1). Additionally, the mean of the normal probability distribution function 108(1) can be the value having the highest probability with respect to the other values of the discrete time 104(1).

The values and the corresponding probabilities of the values of the normal probability distribution function 108(1) are mapped to the visualization 102 to provide the transparency gradient slice 202a. Specifically, the values of the normal probability distribution function 108(1) are mapped to data points of the transparency gradient slice 202a at the discrete time 104(1). In the depicted example, the visual characteristic of each data point includes a transparency. The transparency of the data points are a function of the probability of the corresponding values for the discrete time 104(1). As shown, the mean value of 2 has the highest probability (i.e., 0.4) for the discrete time 104(1). Consequently, the corresponding data point for the value of 2 represented in the transparency gradient slice 202a has a 0% transparency (e.g., is black). Data points corresponding to the remaining values of the normal probability distribution function 108(1) have transparencies that are greater than the transparency of the data point corresponding to the value having the highest probability (e.g., the data point corresponding to the value of 2). In this manner, a gray-scale gradient is provided for the discrete time 104(1). It is appreciated that black is an example color and other colors can be used.

In the depicted example, the normal probability distribution function 108(1) has a variance of 0.5 about the mean of 2. Consequently, a height of the distribution of the transparency gradient slice 202a for the discrete time 104(1) can be provided as the mean value ± (plus or minus) the variance. In the depicted example, the height of the transparency gradient slice 202a ranges from 1.5 to 2.5. Additionally, as result of having lower associated probabilities, the transparencies of the data points corresponding to the values approximate to 1.5 and 2.5 are greater than the transparencies of the data points respectively between the values of 1.5 and 2 and the values of 2.5 and 2. In the depicted example, the data points associated with the values 1.5 and 2.5 are 100% transparent (e.g., are white). Further, the transparencies of the data points linearly increase from the mean value (value of 2 for the discrete time 104(1)) to the mean ± (plus or minus) the variance value (value of 1.5 and 2.5 for the discrete time 104(1)).

In some implementations, the transparency gradient slices can be generated based on a probability distribution function that is not provided as a normal probability distribution function. Consequently, the transparency gradient slice can have data points with associated transparencies that increase or decrease non-linearly over the associated discrete time.

In some implementations, the transparency gradient slices can be associated with a threshold such that, for data points corresponding to values having a probability below the threshold, the transparencies of the data points are 100% (e.g., the data point is transparent). For example, the transparency gradient slice can be associated with a threshold that is equal to probabilities associated with the variance (σ²) such that values that have an associated probability equal to or less than the variance (e.g., values less than 1.5 and above 2.5 for the discrete time 104(1) of FIG. 2A), the corresponding data points have transparencies of 100%. In some implementations, the transparency gradient slice can include data points corresponding to each value of the normal probability function (e.g., values having associated probabilities below the variance).

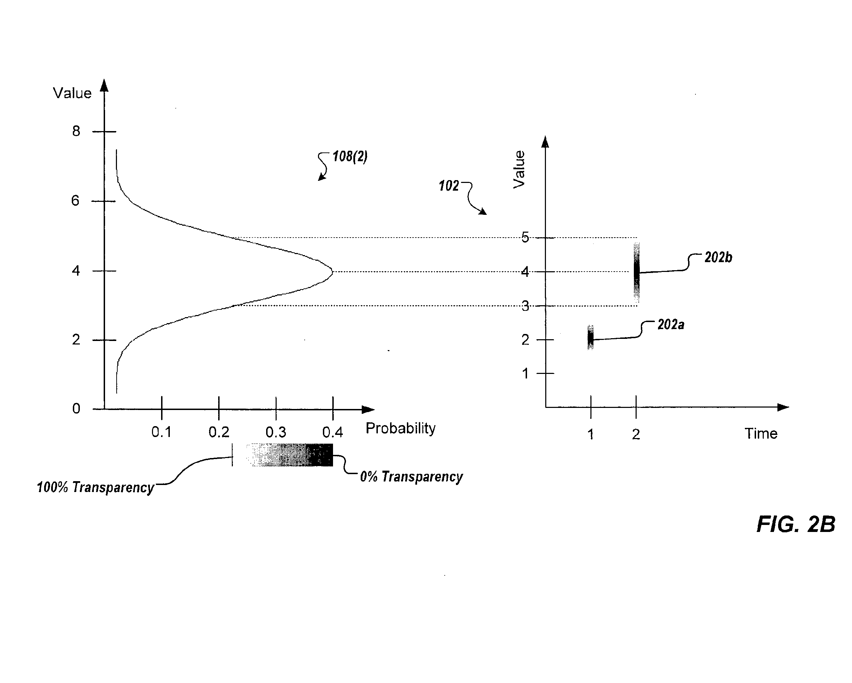

FIG. 2B shows the normal probability distribution function 108(2) for the discrete time 104(2) that is used to generate a transparency gradient slice 202b. The normal probability distribution function 108(2) is shown rotated with respect to the visualization 102 to aid in displaying mapping of the normal probability distribution function 108(2) to provide the transparency gradient slice 202b. The example normal probability distribution function 108(2) includes the parameters of 4.0 for the mean and 1.0 for the variance.

As discussed above with respect to the normal probability distribution function 108(1) and FIG. 2A, the values and the respective probabilities of the normal probability distribution function 108(2) are mapped to the visualization 102 to provide the transparency gradient slice 202b. Specifically, the values of the normal probability distribution function 108(2) are mapped to data points to define the transparency gradient slice 202b. Moreover, the transparencies of the data points are a function of the probability of the corresponding values for the discrete time 104(2). As shown, the mean value of 4 has the highest probability (i.e., 0.4) for the discrete time 104(2). Consequently, the corresponding data point for the transparency gradient slice 202b has a 0% transparency (e.g., black). The data points corresponding to the remaining values of the normal probability distribution function 108(2) have transparencies that are greater than the transparency of the data point corresponding to the value having the highest probability (e.g., the data point corresponding to the value of 4).

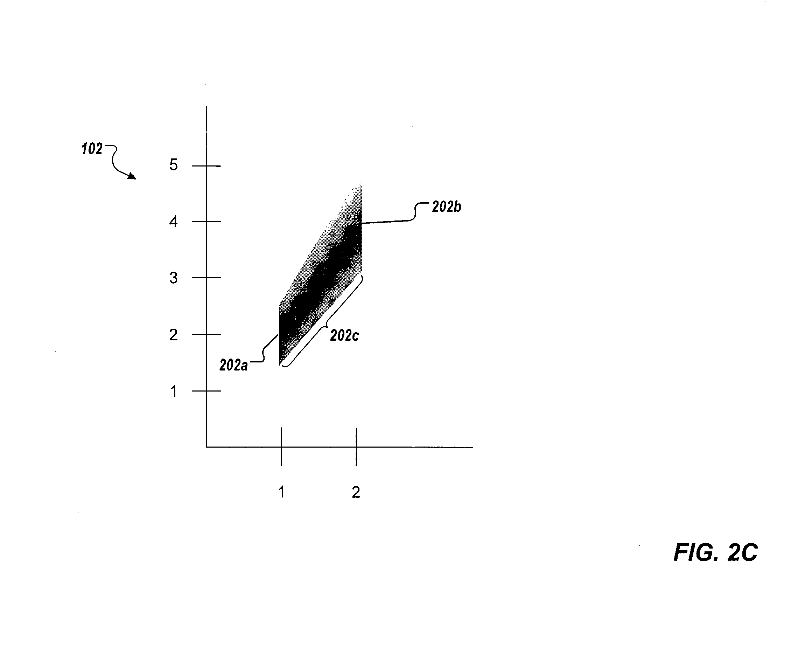

FIG. 2C depicts an intermediate transparency gradient 202c that can be generated based on interpolation between the transparency gradient slice 202a and the transparency gradient slice 202b. Specifically, interpolation of data points and corresponding values between the discrete times 104(1) and 104(2) includes estimating new data points within the range of the known data points for the normal probability distribution functions 108(1) and 108(2) at the discrete times 104(1) and 104(2), respectively. Consequently, the intermediate transparency gradient 202c includes data points associated with values corresponding to times between the discrete times 104(1) and 104(2). The interpolated data points between the discrete times 104(1) and 104(2) can be determined using any interpolation method, for example, curve fitting or regression analysis.

To provide (e.g., generate) the transparency gradient 110, as shown in FIG. 1, the values and the respective probabilities of each of the probability functions 106 for each of the discrete times 104 can be mapped to the visualization 102, with data points being interpolated between the data points corresponding to values for the discrete times 104.

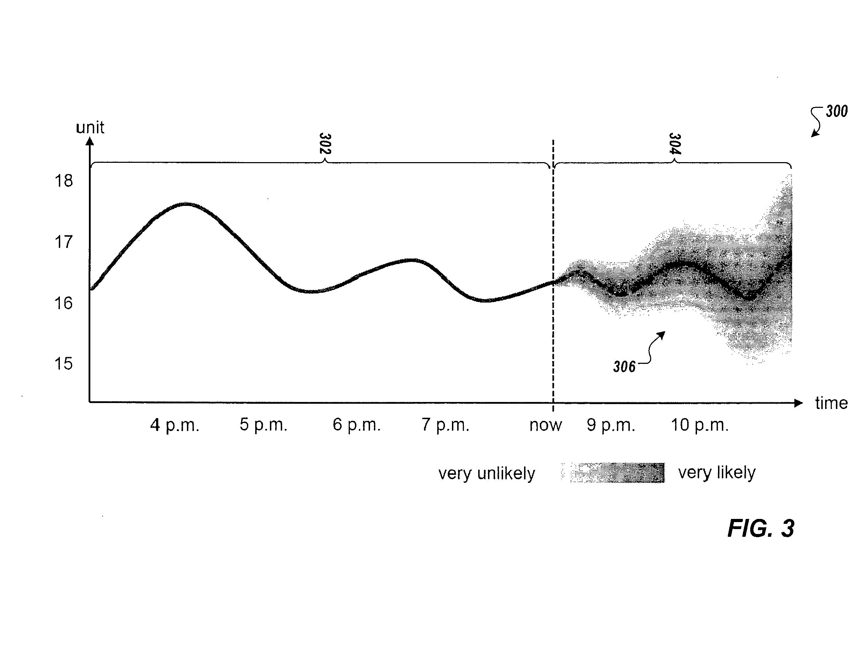

FIG. 3 depicts an example visualization 300. The example visualization 300 includes a certain time series 302 and an uncertain time series 304. The certain time series 302 is provided based on known data (e.g., measured/observed data) at discrete times. The uncertain time series 304 is provided based on predicted data for future discrete times. The uncertain time series 304 includes a transparency visualization 306. The transparency visualization 306 can be generated based on a probability distribution model, as discussed above with respect to FIGs. 1-2C. In the depicted example, the transparency visualization 306 is provided as a continuous transparency gradient including a smooth transition between transparencies to provide a shadowing effect. In this manner, the transparency visualization 306 provides lossless transformation of the probabilities of the values of the data points.

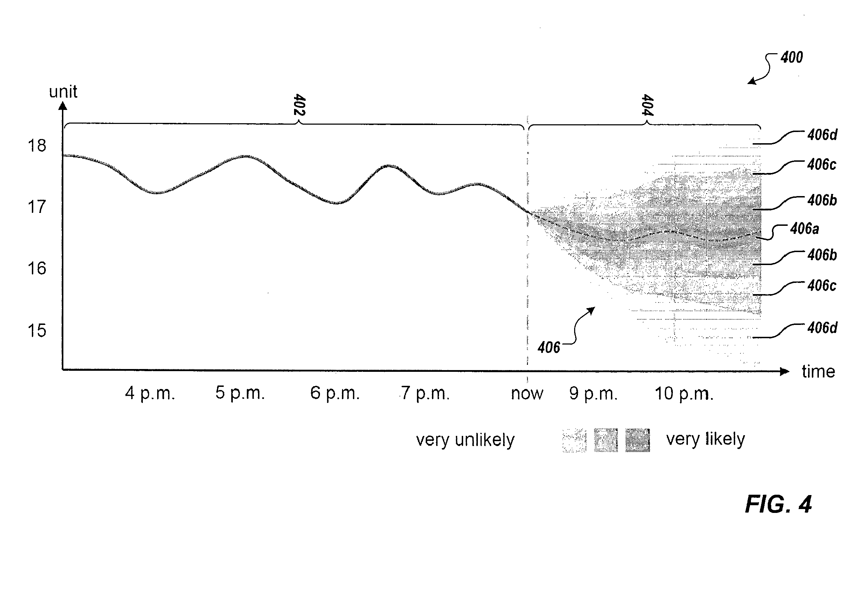

FIG. 4 depicts an example visualization 400. The example visualization 400 includes a certain time series 402 and an uncertain time series 404. The certain time series 402 is provided based on known data (e.g., measured/observed data) at discrete times. The uncertain time series 404 is provided based on predicted data for future discrete times. The uncertain time series 404 includes a transparency visualization 406. The transparency visualization 406 can be generated based on a probability distribution model, as discussed above with respect to FIGs. 1-2C. In the depicted example, the transparency visualization 406 is provided as a discrete transparency gradient that includes finite probabilities for values. More particularly, the transparency visualization 406 includes a probability bands 406a-406d, each band corresponding to a range of values for each time. In the depicted example, the transparency visualization 406 includes four probability bands 406a-406d. It is appreciated, however, that the transparency visualization 406 can include any number of probability bands. In some implementations, the probability distribution function is a discrete probability distribution function (e.g., a Poisson distribution, a Bernoulli distribution, a binominal distribution, a geometric distribution, and a negative binomial distribution). In some implementations, the probability of the values for the discrete times corresponding to the data points can be altered to "fit" into one of the probability bands 402. For example, the probabilities of the values of the discrete times can be changed to one of the probability bands having the closest probability to the probability of the value.

In some implementations, the transparency visualization 406 is associated with a normal probability distribution function (e.g., the normal probability distribution function 108). As a result, the transparency of the data points increases from the mean value to the mean value ± (plus or minus) the variance value. However, in some implementations, the transparency visualization 406 can be associated with a probability distribution function other than a normal probability distribution function. Consequently, the transparency visualization 406 can have probability bands that increase and/or decrease non-linearly within the transparency visualization 406 at the corresponding discrete time.

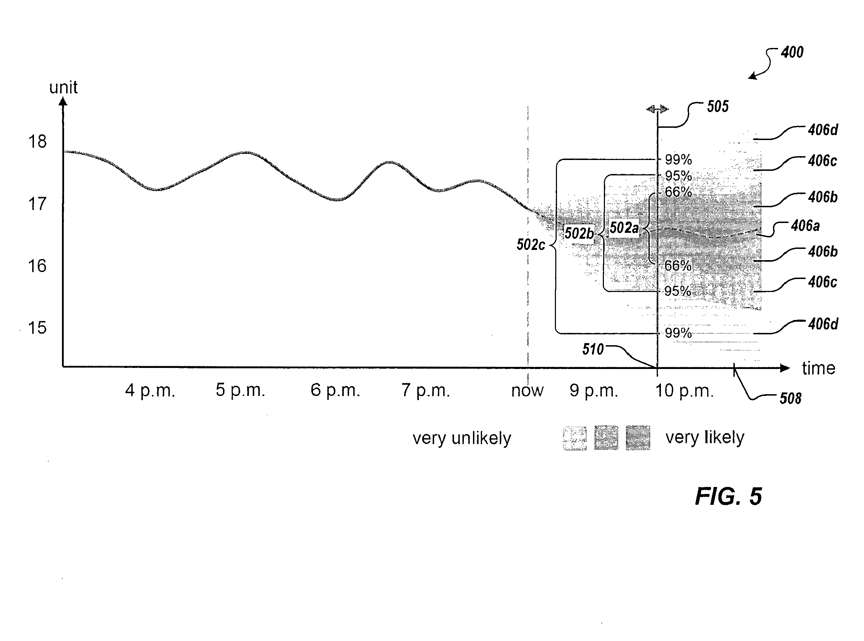

FIG. 5 depicts the example visualization 400 including confidence intervals 502a-502c associated with respective probability bands. The confidence intervals 502a-502c are displayed along an axis 505 and provide interval estimates that indicate the reliability of a value corresponding to a data point for the discrete time. The confidence intervals 502a-502c indicate that, for a particular probability band, a confidence that any data point within the confidence level is the value for the discrete time. In the depicted example, the probability band 406b is associated with a confidence interval of 66%. Consequently, the value for a discrete time has a 66% chance of being a data point within the probability band 406b. As another example, the probability band 406c is associated with a confidence interval of 95%. Consequently, the value for a discrete time has a 95% chance of being a data point within the probability bands 406a, 406b and 406c (and a 29% chance of being a data point within the probability band 406c). As another example, the probability band 406d has a confidence interval of 99%. Consequently, the value for the discrete time has a 99% chance of being a data point within the probability bands 406a, 406b, 406c and 462d (and a 4% chance of being a data point within the probability band 406d).

In some implementations, a moveable confidence interval tool can be provided with the visualization. In some examples, the confidence interval tool can be executed by a computing device that displays a particular visualization. With continued reference to FIG. 5, the confidence interval tool can be used to move the position of the axis 505 along the x-axis (e.g., time axis). As the axis 505 is moved along the x-axis, the confidence intervals 502a-502c can independently move along the y-axis (e.g., value axis) and can generally track the topographies of the respective probability bands. In the depicted example, the axis 505 is moved from a first time 510 to a second time 508 and the confidence intervals 502a-502c move, tracking the topographies of the respective probability bands.

Although, in the example of FIG. 5, the confidence intervals 502a-502c are associated with the discrete transparency gradient 406, it is appreciated that confidence intervals can also be provided for continuous transparency gradients (e.g., the transparency gradient 306 of FIG. 3).

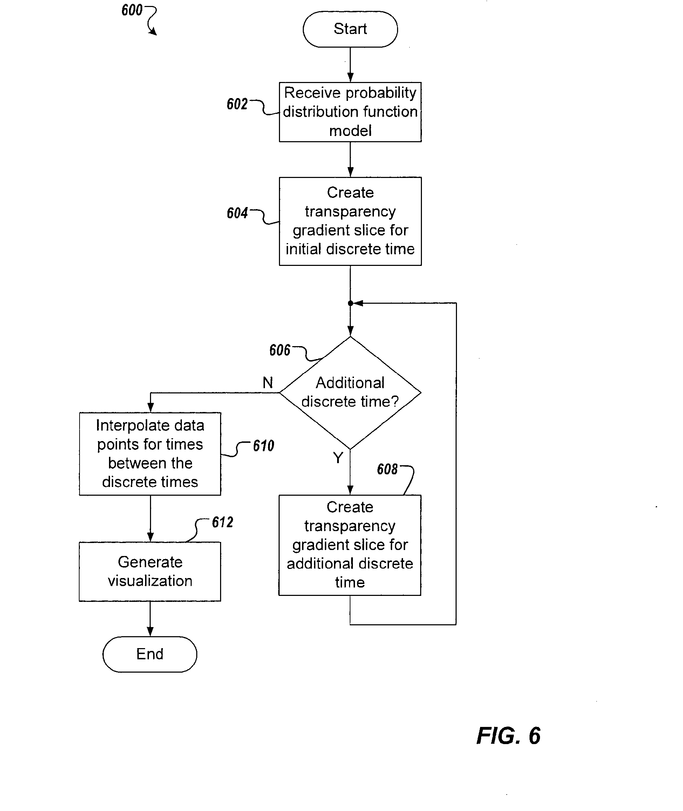

FIG. 6 is a flowchart depicting an example process for creating a visualization of an uncertain time series. The example process 600 can be executed as one or more software programs using one or more computing devices.

A probability distribution function model for an uncertain time series is received (602). In some examples, the probability distribution function model is stored in computer-readable memory and is received from the computer-readable memory. The probability distribution function model provides probability distribution functions that represent probabilities of values for discrete times of the uncertain time series. For example, and referring again to FIG. 1, the probability distribution function 106 represents probabilities of values corresponding to the respective discrete times 104. In some implementations, the probability distribution function is a normal probability distribution function.

A transparency gradient slice for the probability distribution function of the initial discrete time is created (604). In some examples, the probability distribution function for the first discrete time is mapped to a transparency gradient. For example, and with reference to FIG. 2A, the normal probability function 108(1) for the discrete time 104(1) is mapped to provide the transparency gradient slice 202a. The transparency gradient slice includes a plurality of data points that graphically represent the probability distribution function, and particularly, graphically represents the values of the probability distribution function for the discrete time. The transparencies of the data points are mapped accordingly to the probability of the value for the discrete time.

It is determined whether the uncertain times series includes an additional discrete time (606). If it is determined that the uncertain time series includes an additional discrete time, a transparency gradient slice of the probability distribution function of the additional discrete time is created (608). Similar to creating the transparency gradient slice for the probability distribution function of the initial discrete time, the transparency gradient slice of the probability distribution function of the additional discrete time is created. In some examples, and with reference to FIG. 2B, the values and the respective probabilities of the normal probability distribution function 108(2) are mapped to provide the transparency gradient slice 202a.

If is determined that the uncertain time series does not include an additional discrete time, data points corresponding to values for times between each of the discrete times of the uncertain time series are interpolated (610). Specifically, interpolation of data points and corresponding values between the discrete times includes estimating new data points within the range of the known data points for the probability distribution function at the discrete times. For example, and with reference to FIG. 2C, the intermediate transparency gradient 202c is provided and includes data points corresponding to interpolated values between the discrete times 104(1) and 104(2).

The visualization is generated based on the transparency gradient slices and intermediate transparency gradients (612). In some examples, the visualization is generated based on the created transparency gradient of the probability distribution function model.

Visualization of the uncertain time series can include, among others, visualization of measures with assumed metering fluctuations; visualization of general data distributions; and visualization of location based information. With respect to visualization of measurements with assumed metering fluctuations, typically the fluctuation of a measuring device or sensor is known in advance and thus, the visualization of the measurements can include those fluctuations, which are then represented using the visualization. With respect to visualization of general data distributions, the distribution of data that is aggregated using an aggregation attribute like different points in time or different metering points is typically visualized using quartiles. Quartiles describe the distribution of measurements for historic data within an aggregation. In some examples, the most important values can be the 2nd Quartile (mean) as well as the 1st Quartile (lower bound, 75% of all measurements are larger than this value) and 3rd Quartile (upper bound, 75% of all measurements are smaller than this value). In conjunction with the absolute minimum and maximum, the visualization visualizes the distribution of historic values within an aggregate. With respect to visualization of location-based information, for location-based measurements, inaccuracy regarding the exact point of a measurement is assumed. The inaccuracy results from that typically location-based measurements are accomplished with the help of location systems like GPS that include a calculated inaccuracy. The visualization can be employed to visualize the uncertainty of the presented location.

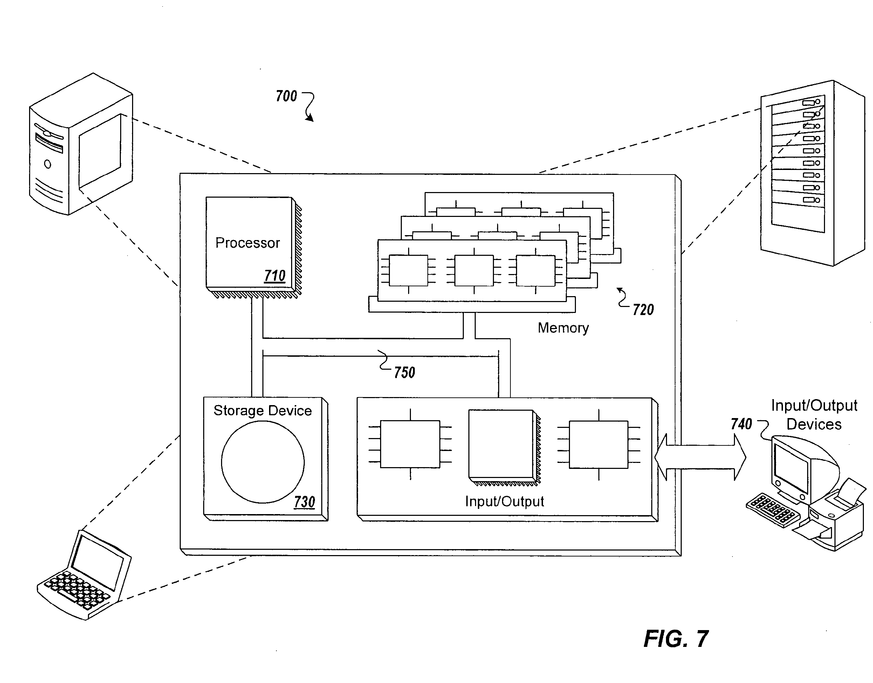

Referring now to FIG. 7, a schematic diagram of an example computing system 700 is provided. The system 700 can be used for the operations described in association with the implementations described herein. For example, the system 700 may be included in any or all of the server components discussed herein. The system 700 includes a processor 710, a memory 720, a storage device 730, and an input/output device 740. Each of the components 710, 720, 730, and 740 are interconnected using a system bus 750. The processor 710 is capable of processing instructions for execution within the system 700. In one implementation, the processor 710 is a single-threaded processor. In another implementation, the processor 710 is a multi-threaded processor. The processor 710 is capable of processing instructions stored in the memory 720 or on the storage device 730 to display graphical information for a user interface on the input/output device 740.

The memory 720 stores information within the system 700. In one implementation, the memory 720 is a computer-readable medium. In one implementation, the memory 720 is a volatile memory unit. In another implementation, the memory 720 is a non-volatile memory unit. The storage device 730 is capable of providing mass storage for the system 700. In one implementation, the storage device 730 is a computer-readable medium. In various different implementations, the storage device 730 may be a floppy disk device, a hard disk device, an optical disk device, or a tape device. The input/output device 740 provides input/output operations for the system 700. In one implementation, the input/output device 740 includes a keyboard and/or pointing device. In another implementation, the input/output device 740 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier, e.g., in a machine-readable storage device, for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

A number of implementations of the present disclosure have been described. Nevertheless, it will be understood that various modifications may be made without departing from the spirit and scope of the present disclosure. Accordingly, other implementations are within the scope of the following claims.

## Claims

1. A computer-implemented method of providing a visualization depicting an uncertain time series, the method being performed using one or more processors and comprising:
receiving, from computer-readable memory, a probability distribution function model, the probability distribution function model representing the uncertain time series and providing a plurality of probability distribution functions, each probability distribution function corresponding to respective values at a respective time in the uncertain time series;
generating, using one or more processors, the visualization based on the probability distribution function model to create a transparency gradient, the transparency gradient comprising a plurality of points graphically representing the plurality of probability distribution functions; and
displaying, on a display device, the visualization including the transparency gradient, wherein a visual characteristic of each point of the plurality of points of the transparency gradient is a function of a probability of the respective value associated with the respective point.

2. The method of claim 1, wherein the visual characteristic of each point of the plurality of points has a direct relationship with the probability of the respective value associated with the respective time.

3. The method of claim 2, wherein the visual characteristic comprises transparency and a lower transparency of each point of the plurality of points indicates a higher probability of the respective value associated with the respective time.

4. The method of any one of the preceding claims, further comprising interpolating data points and visual characteristics for additional times that are between the respective times of each corresponding probability distribution function.

5. The method of any one of the preceding claims, wherein the visualization includes a continuous transparency gradient.

6. The method of any one of the preceding claims, wherein the visualization includes a discrete transparency gradient.

7. The method of claim 6, wherein the discrete transparency gradient includes two or more probability bands.

8. The method of any one of the preceding claims, wherein displaying further comprises displaying one or more confidence intervals overlaying the transparency gradient.

9. The method of claim 8, further comprising:
receiving user input associated with the one or more confidence intervals; and
moving, in response to the user input, the one or more confidence intervals relative to the transparency gradient.

10. A non-transitory computer-readable storage medium coupled to one or more processors and having instructions stored thereon which, when executed by the one or more processors, cause the one or more processors to perform operations for providing a visualization depicting an uncertain time series, the operations comprising:
receiving, from computer-readable memory, a probability distribution function model, the probability distribution function model representing the uncertain time series and providing a plurality of probability distribution functions, each probability distribution function corresponding to respective values at a respective time in the uncertain time series;
generating the visualization based on the probability distribution function model to create a transparency gradient, the transparency gradient comprising a plurality of points graphically representing the plurality of probability distribution functions; and
displaying, on a display device, the visualization including the transparency gradient, wherein a visual characteristic of each point of the plurality of points of the transparency gradient is a function of a probability of the respective value associated with the respective point.

11. A system, comprising:
a computing device; and
a computer-readable storage device coupled to the computing device and having instructions stored thereon which, when executed by the computing device, cause the computing device to perform operations for providing a visualization depicting an uncertain time series, the operations comprising:
receiving a probability distribution function model, the probability distribution function model representing the uncertain time series and providing a plurality of probability distribution functions, each probability distribution function corresponding to respective values at a respective time in the uncertain time series;
generating the visualization based on the probability distribution function model to create a transparency gradient, the transparency gradient comprising a plurality of points graphically representing the plurality of probability distribution functions; and
displaying the visualization including the transparency gradient, wherein a visual characteristic of each point of the plurality of points of the transparency gradient is a function of a probability of the respective value associated with the respective point.
